# FASCICULE DE BREVET EUROPEEN

(11) **EP 3 635 831 B1**
(45) Date de publication et mention de la délivrance du brevet: **11.05.2022**
(21) Numéro de dépôt: 18736991.3
(22) Date de dépôt: 07.06.2018
(51) Int. Cl.: H02H 3/33

(54) **DISPOSITIF DE PROTECTION DIFFERENTIELLE POUR LA DETECTION D'UN COURANT DE DEFAUT**
DIFFERENZIALSCHUTZVORRICHTUNG ZUR DETEKTION EINES FEHLERSTROMS
DIFFERENTIAL PROTECTION DEVICE FOR DETECTING A FAULT CURRENT

(30) Priorité: 08.06.2017 FR 1755130
(43) Date de publication de la demande: 15.04.2020
(73) Titulaire: Hager-Electro SAS, 67210 Obernai (FR)
(72) Inventeur: JOYEUX, Patrice, 67140 Heiligenstein (FR); DOLISY, Bastien, 67210 Obernai (FR)
(74) Mandataire: Cabinet Nuss
(86) Numéro de dépôt international: PCT/FR2018/051322
(87) Numéro de publication internationale: WO 2018/224782

(56) Documents cités:
- WO-A2-2017/072442
- DE-A1-102011 011 983
- US-B1- 6 747 856

## Description

La présente invention concerne les équipements et systèmes de sécurité des biens et des personnes dans le domaine électrique, plus particulièrement les dispositifs de protection de personnes à courant différentiel résiduel (ou DDR), et a pour objet un dispositif de protection différentiel intégrant une fonction coupe-feu.

Ce type de dispositif de protection est couramment intégré dans des installations électriques domestiques ou tertiaires, en amont ou à l'entrée des diverses arborescences des circuits d'alimentation en place, voir au plus près des récepteurs auxquels ils sont respectivement affectés.

Typiquement, ces installations électriques sont alimentées par un réseau électrique alternatif, et des dispositifs de protection du type précité ont pour but d'assurer principalement la sécurité des personnes en détectant le plus rapidement possible toute fuite éventuelle vers la terre dans un des circuits ou récepteurs à protéger. De telles fuites sont par exemple causées par des contacts directs de sujets avec un conducteur non isolé ou des contacts indirects dus à des défauts de masse. Ces incidents électriques sont susceptibles de générer des accidents, parfois mortels, des détériorations de matériel(s), des départs d'incendie, des dysfonctionnements localisés ou généralisés ou analogues.

La protection différentielle, dans le contexte précité, s'effectue dans la plupart des cas d'une manière assez standardisée : au moins l'un des ou tous les conducteurs du circuit à protéger, ou l'un des ou les conducteurs de la ligne d'alimentation de ce circuit, passe(nt) dans un tore de matériau ferromagnétique d'un transformateur dont le(s) conducteur(s) précité(s) forme(nt) le primaire et qui comporte un ou plusieurs enroulement(s) ou bobinage(s) secondaire(s). Le tore joue le rôle d'un concentrateur de flux magnétique. Ainsi en cas de fuite, se traduisant par un déséquilibre des courants d'entrée et de sortie dans les conducteurs des lignes à protéger, le flux créé dans le tore par ce déséquilibre au niveau du primaire, induit dans le bobinage secondaire une tension, utilisée pour commander directement, ou à travers une électronique dédiée (étages de traitement des signaux), un actionneur (par exemple de type relais). Ce dernier actionne à son tour un mécanisme de déclenchement, de coupure ou d'ouverture associé, ou ceux d'autres appareils de protection de l'installation.

Ces appareils ou dispositifs électriques de protection différentielle peuvent présenter des caractéristiques variables. Ainsi, ils sont mutuellement différentiables et caractérisés par leur sensibilité propre, qui dépend notamment du type d'installation électrique dans laquelle ils sont utilisés et qu'ils sont destinés à protéger. Par ailleurs, certains de ces appareils ne sont capables de détecter des fuites que pour des courants alternatifs (type AC) alors que d'autres, plus complets, offrent des solutions également applicables au courant continu pulsé (types A et F) ou lissé (type B).

Un dispositif du type B est par exemple décrit dans la demande de brevet français n° 2 993 058 au nom de la demanderesse.

Par ailleurs, pour les dispositifs ayant la capacité de détecter des courants de défaut alternatifs, la fréquence limite supérieure de détection constitue un autre critère de distinction entre les différents types : fréquences jusqu'à 1kHz: type F; fréquences jusqu'à 2kHz : type B ; fréquences jusqu'à 20kHz : type B+.

En particulier, le type B+ est, par rapport aux autres types, spécifiquement sensible aux fréquences de courant de défaut ou de fuite propices aux départs de feu.

Actuellement, les solutions existantes pour atteindre le gabarit fréquentiel requis pour un classement de type B+ sont principalement de deux types :
- mise en œuvre d'un ensemble électronique actif réalisant des corrections adaptées de la bande passante de la courbe de sensibilité à la fréquence du courant de défaut. Un défaut d'alimentation de l'ensemble électronique transforme ce dispositif de type B+ en un dispositif de type A/AC seulement (les fonctionnalités liées au type F ou au type B ne sont plus remplies).
- mise en œuvre d'un relais électronique pour inhiber la protection de type A/AC et son remplacement par un moyen actif réalisant la fonction AC, A, F et B.

Dans les deux solutions précitées, du type B+, on aboutit à une construction complexe, coûteuse et encombrante fondée sur la mise en œuvre de deux circuits indépendants en parallèle ou en concurrence, la fonction coupe-feu étant inopérante en cas d'absence d'alimentation secteur.

Par le document EP 1 201 015, on connaît un dispositif de protection contre les courants de défaut avec un transformateur de courant cumulé et un circuit de déclenchement relié à un unique enroulement secondaire dudit transformateur. Ce circuit de déclenchement comprend un montage de déclenchement avec un circuit RC relié en parallèle sur son entrée connectée à l'enroulement secondaire. Ce circuit RC est dimensionné de telle manière que la valeur du courant de défaut de déclenchement est située en dessous de deux courbes limites définies réglementairement. Ces deux courbes comprennent, d'une part, une première courbe limite prédéterminée pour des fibrillations ventriculaires selon la norme IEC479 et, d'autre part, une seconde courbe limite prédéterminée associée à la protection contre le feu.

Le dispositif selon le document EP précité assure une telle protection contre le feu jusqu'à des fréquences de 20 kHz seulement. En effet, à partir de 10 kHz environ, des pertes supplémentaires surviennent dans le noyau (généralement un tore) qui dégradent la tension au secondaire.

Or, il existe actuellement une demande pour disposer d'une protection contre le feu au-delà de 20 kHz et jusqu'à environ 100 kHz au moins.

Ainsi, le but premier de l'invention est de proposer un dispositif de protection différentielle du type évoqué en introduction et réalisant une fonction de protection contre le feu pour des fréquences élevées du courant de défaut, avantageusement situées au-delà de 20 kHz, ce tout en présentant une construction simple, de nature électromécanique (c'est-à-dire de type « voltage independent » : indépendant de la tension), peu coûteuse et d'encombrement réduit.

A cet effet, l'invention a pour objet un dispositif de protection différentielle permettant la détection de courant de fuite ou de défaut dans une installation électrique alimentée par au moins un conducteur de phase d'un réseau et au moins un conducteur de neutre et/ou de terre dudit réseau,
ledit dispositif comprenant, d'une part, un transformateur avec un noyau, préférentiellement torique, en matériau ferromagnétique, avec un primaire constitué par au moins deux des conducteurs précités et avec un ou plusieurs bobinage(s) secondaire(s) aux bornes duquel, ou de chacun desquels, s'établit un signal induit lors de l'apparition d'un défaut différentiel au niveau du primaire et d'autre part, au moins un circuit de traitement et de commande adapté pour traiter le signal induit et pour, en cas de dépassement d'une valeur de seuil prédéfinie, commander un actionneur électromagnétique, un relais ou un moyen de coupure ou d'ouverture analogue du dispositif, le(s)dit(s) circuit(s) de traitement et de commande étant relié(s) aux bornes dudit au moins un bobinage secondaire,
dispositif de protection différentielle caractérisé
en ce que le transformateur comporte deux bobinages secondaires avec un point commun,
en ce qu'un circuit passif comprenant une inductance au moins, ainsi qu'au moins une résistance et/ou au moins un condensateur en série, est relié aux bornes d'au moins un des bobinages secondaires et
en ce que ledit circuit de traitement et de commande et ledit circuit passif sont arrangés et connectés de manière telle :
   - que l'un de ces deux circuits est connecté, d'une part, au point commun et, d'autre part, à la borne non reliée au point commun d'un premier des deux bobinages secondaires et
   - que l'autre de ces deux circuits est soit connecté à chacune des bornes des bobinages secondaires non reliée au point commun, soit connecté, d'une part, au point commun et, d'autre part, à la borne non reliée au point commun du second des deux bobinages secondaires.

L'invention sera mieux comprise, grâce à la description ci-après, qui se rapporte à des modes de réalisation préférés, donnés à titre d'exemples non limitatifs, et expliqués avec référence aux dessins schématiques annexés, dans lesquels :
les figures 1 à 5 sont des représentations schématiques et symboliques de cinq modes de réalisation différents d'un dispositif de protection différentielle selon l'invention ;
les figures 6 à 10 (respectivement A et B) sont des courbes de sensibilité en termes de valeurs seuil de déclenchement de courant de fuite (figures B) et d'impédance équivalente (figures A) du circuit passif mis en œuvre dans l'un quelconque des dispositifs des figures 1 à 5, ce en fonction de la fréquence desdits courants de fuite, et à chaque fois pour une réalisation spécifique différente dudit circuit passif (représenté respectivement sur les figures 6A à 10A, sous forme de représentation schématique inserrée), en accord avec des variantes constructives de l'invention,
la figure 11 est une représentation schématique d'un arrangement possible de dispositifs différentiels selon l'invention.

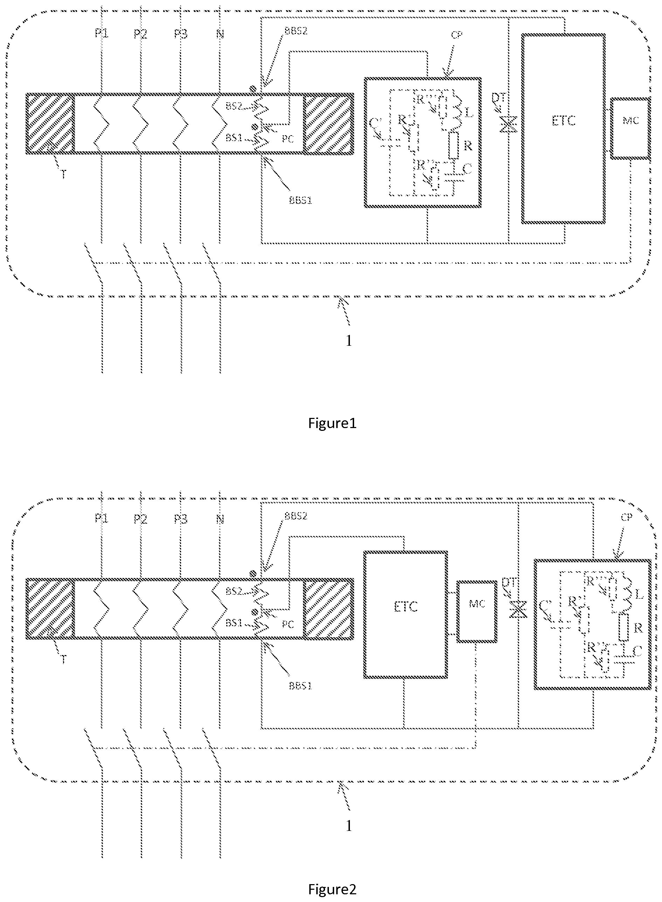

Les figures 1 à 5 montrent toutes un dispositif de protection différentielle permettant la détection de courant de fuite ou de défaut dans une installation électrique alimentée par au moins un conducteur de phase P1, P2, P3 d'un réseau et au moins un conducteur de neutre et/ou de terre N dudit réseau.

Ledit dispositif 1 comprend, d'une part, un transformateur avec un noyau, préférentiellement torique, en matériau ferromagnétique T, avec un primaire constitué par au moins deux des conducteurs P1, P2, P3, N précités et avec un ou plusieurs bobinage(s) secondaire(s) BS1, BS2 aux bornes duquel, ou de chacun desquels, s'établit un signal induit lors de l'apparition d'un défaut différentiel au niveau du primaire et d'autre part, au moins un circuit de traitement et de commande ETC adapté pour traiter le signal induit et pour, en cas de dépassement d'une valeur de seuil prédéfinie, commander un actionneur électromagnétique, un relais ou un moyen de coupure ou d'ouverture analogue MC du dispositif 1, le(s)dit(s) circuit(s) ETC étant relié(s) aux bornes du ou des bobinages(s) secondaire(s) BS1, BS2 considéré(s).

Conformément à l'invention, il est prévu
que le transformateur T comporte deux bobinages secondaires BS1 et BS2 avec un point commun PC,
qu'un circuit passif CP comprenant une inductance L au moins, avec au moins une résistance R et/ou au moins un condensateur C en série, est relié aux bornes d'au moins un des bobinages secondaires BS1, BS2 et
que ledit circuit de traitement et de commande ETC et ledit circuit passif CP sont arrangés et connectés de manière telle :
   - que l'un de ces deux circuits ETC et CP est connecté, d'une part, au point commun PC et, d'autre part, à la borne BBS1 non reliée au point commun PC d'un premier BS1 des deux bobinages secondaires BS1 et BS2 et
   - que l'autre de ces deux circuits ETC et CP est soit connecté à chacune des bornes BBS1, BBS2 des bobinages secondaires BS1 et BS2 non reliée au point commun PC, soit connecté, d'une part, au point commun PC et, d'autre part, à la borne BBS2 non reliée au point commun PC du second BS2 des deux bobinages secondaires BS1 et BS2.

Grâce aux dispositions techniques ci-dessus, l'invention permet de fournir un dispositif 1 qui est moins sensible aux capacités parasites (fréquence de coupure plus élevée, seules des pertes dans le tore T subsistent), qui permet de fournir un plateau pour des fréquences élevées, notamment supérieures à 100 kHz (l'inductance L compense les pertes du tore T) et qui permet de bien séparer le problème basse-fréquence et haute-fréquence.

De plus, dans le cas de la réalisation de la figure 1, le circuit ETC est connecté sur une inductance composite, formée par l'addition des deux bobinages ou enroulements secondaires BS1 et BS2 (ledit circuit voit la tension cumulée des deux bobinages).

En outre, si le nombre de spires du bobinage BS1 est très fortement inférieur au nombre de spires du bobinage BS2 (par exemple au moins deux fois inférieur), l'inductance du tore T vue par le circuit passif CP est fortement diminuée.

Bien que présentant une continuité physique au niveau de leurs enroulements, les bobinages BS1 et BS2 constituent du point de vue électrique et magnétique deux bobinages distincts.

Avantageusement, l'inductance L faisant partie du circuit passif CP est dimensionnée de telle manière que, pour des fréquences de courant de défaut supérieures à environ 20 kHz, le seuil de déclenchement du circuit ETC est inférieur ou égal à 420 mA, préférentiellement au plus égal à 300 mA.

Outre le fait d'étendre la sécurité normative pour la protection des personnes et la protection contre les incendies au-delà de 20kHz, préférentiellement au-delà de 100kHz, la mise en œuvre d'une inductance L dimensionnée comme indiqué ci-dessus entraîne un renforcement de la sécurité (seuil de déclenchement plus bas) et permet simultanément de pouvoir corriger les défauts liés aux facteurs parasites de certains composants du dispositif 1, comme par exemple les capacités parasites des diodes transil DT, qui sont montées directement en parallèle des enroulements secondaires.

Selon une première variante de réalisation, le circuit passif CP comprend également au moins une résistance R, montée en série avec l'inductance L.

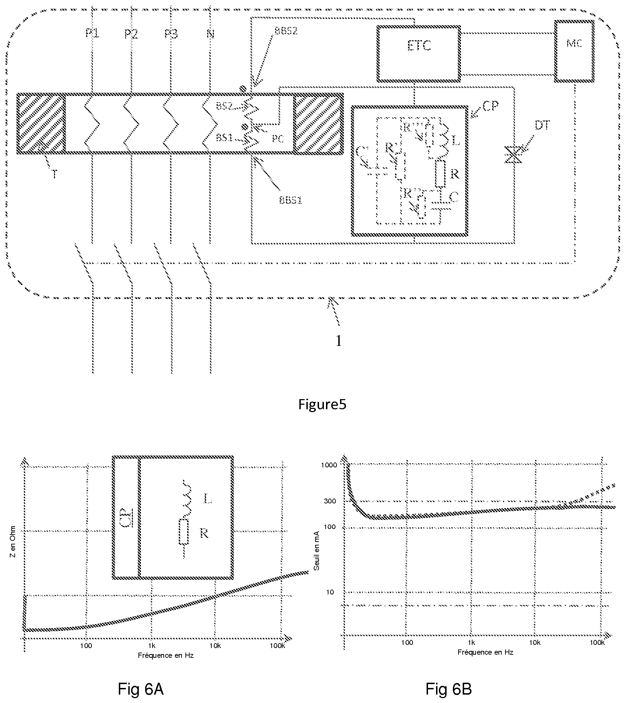

Comme le montre le schéma en insert dans la figure 6A, le circuit passif CP peut alors, le cas échéant, se présenter sous la forme d'un simple circuit LR série.

Préférentiellement, la valeur de la résistance R est dimensionnée de telle manière que, pour des fréquences de courant de défaut supérieures à 20 kHz environ, le seuil de déclenchement du circuit ETC est inférieur ou égal à 420 mA, préférentiellement au plus égal à 300 mA.

Selon une seconde variante de réalisation, alternative ou cumulative avec la première variante précitée, le circuit passif CP comprend également au moins un condensateur C monté en série avec l'inductance L.

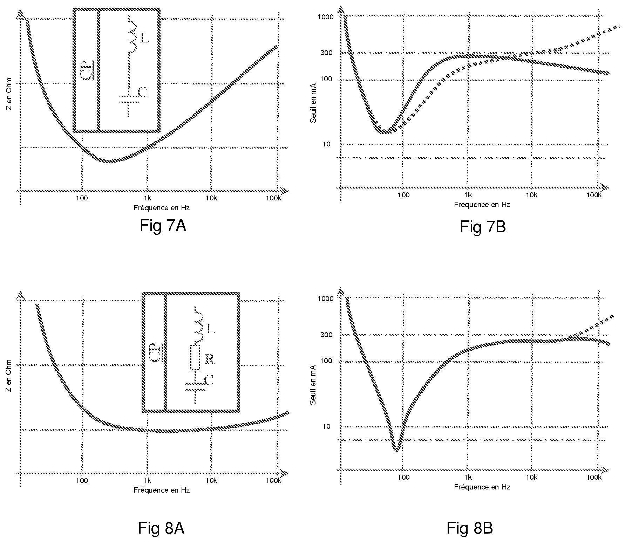

Comme le montre le schéma en insert de la figure 7A, le circuit passif CP peut alors, le cas échéant, se présenter sous la forme d'un simple circuit LC série.

Préférentiellement, la capacité du condensateur C est dimensionnée de telle manière que, pour des fréquences de courant de défaut inférieures à environ 1 kHz, le seuil de déclenchement du circuit ETC est inférieur ou égal à 420 mA, préférentiellement au plus égal à 300 mA (ce condensateur C permet de régler le seuil de déclenchement à IDN pour une fréquence ≤ 1000 Hz).

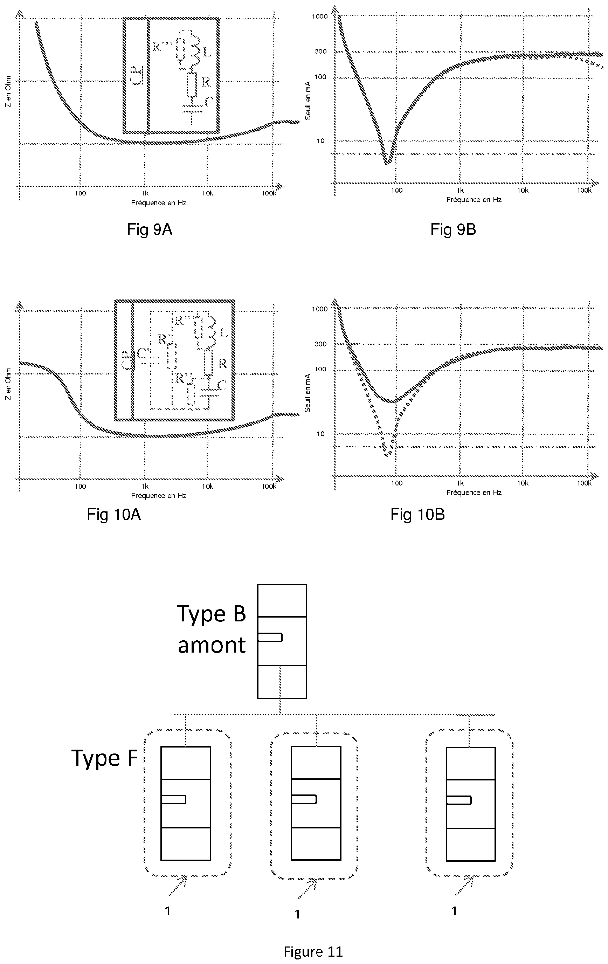

En accord avec un mode de réalisation extrêmement préféré de l'invention, et comme cela ressort des figures 1 à 5 et 10A, ainsi que des figures 8A et 9A, le circuit passif CP comprend au moins un circuit RLC série (préférentiellement exactement un), les différents composants R, L et C dudit circuit étant dimensionnés de telle manière que le seuil de déclenchement du circuit ETC soit inférieur à 420 mA, préférentiellement inférieur ou égal à 300 mA, pour des fréquences du courant de défaut comprises entre 0 Hz et 50 kHz au moins, préférentiellement entre 0 Hz et 100 kHz au moins.

Comme l'illustrent les figures précitées, le circuit passif CP peut se limiter uniquement à un simple circuit RLC (figure 8A), ou alors se présenter sous la forme d'un circuit passif plus complexe dont le circuit RLC n'est qu'une composante, néanmoins prédominante (cf. figures 1 à 5, 9A et 10A).

Grâce aux configurations et aux dimensionnements des composants R, L et C mentionnés dans les variantes et modes de réalisations précités, l'invention permet de respecter simultanément les contraintes de limite de courant fixées par le standard IEC479-2 (risques de fibrillation cardiaque), ainsi que les contraintes de limite de courant stipulées dans le standard IEC60364-4-42 et les directives 3501 VDS (risques d'emballement thermique).

Pour les constructions selon la figure 2, les valeurs des composants du circuit RLC peuvent être choisis comme suit : R compris entre 2000 ohms et 7000 ohms ; L compris entre 1 mH et 10 mH ; C compris entre 20 nf et 80 nf.

Pour la construction selon les figures 1 et 3 à 5, les valeurs des composants peuvent s'établir comme suit : 200 ohms ≤ R < 700 ohms ; 200 nf ≤ C ≤ 800 nf ; 0,01 mH < L < 1 mH (cette faible valeur d'inductance permet de réduire la taille de la bobine d'inductance L et son encombrement sur la carte de circuit imprimé). De manière générale, pour ces constructions, moins le bobinage BS1 (sur lequel CP est monté en parallèle) a de spires, plus la valeur de L peut être réduite. Bien qu'étant inférieur au nombre de spires de BS2, BS1 comporte préférentiellement au moins 250 spires.

Comme le montrent les figures 1 et 2, il peut être prévu qu'une résistance R' soit montée en parallèle aux bornes du circuit passif CP. Une telle résistance supplémentaire R' (par exemple compris entre 0,1 Mohms et 1,0 Mohms) permet de fixer l'impédance aux basses fréquences et autorise la réalisation de dispositifs 1 avec des sensibilités différentes (100 mA, 300 mA, 420 mA, ...) tout en utilisant le même tore T.

Alternativement ou simultanément, il peut aussi être prévu qu'une résistance R" soit montée en parallèle aux bornes du condensateur C du circuit passif CP. Une telle résistance additionnelle R" (par exemple compris entre 10 kohms et 1 Mohms) permet de fixer un palier supplémentaire limitant l'influence de C et de fixer un autre seuil de déclenchement en basse fréquence. L'influence de R" au niveau de CP est sensiblement équivalente à celle de R'.

Selon une autre caractéristique possible de l'invention, un condensateur C' peut être monté en parallèle aux bornes du circuit passif CP. Ce condensateur C' (par exemple de quelques pF) peut réaliser un filtrage des fréquences au-delà d'une certaine valeur, par exemple au-delà d'environ 100 kHz.

Les composants C' et R' qui peuvent être montés aux bornes du circuit passif CP, peuvent être séparés de ce dernier ou faire constructivement partie de ce circuit (cf. figures 1 à 5 et 10A).

Enfin, il peut également être envisagé, comme le montrent les figures 1 à 5 et 10A à titre d'exemple, qu'une résistance supplémentaire R‴ soit montée en parallèle sur l'inductance L du circuit passif CP (avec par exemple R'" compris entre 1 kohms et 1 Mohms). Une telle résistance R‴ permet de limiter l'effet de l'inductance L pour des fréquences élevées du courant de défaut, par exemple supérieure à environ 100 kHz.

Afin d'éviter les déclenchements intempestifs du dispositif 1 lors de courants élevés du type foudre et surtout de protéger les composants électroniques du circuit ETC, le dispositif 1 peut comprendre, en outre, une diode transil DT qui est montée en parallèle sur l'un des deux bobinages secondaires BS1 et BS2, ou en parallèle sur ces deux bobinages.

En connectant la diode transil DT aux bornes opposées des deux bobinages cumulés, il est possible de sélectionner une diode DT avec une tension plus élevée et de ce fait diminuer la valeur de la capacité parasite de celle-ci (qui dépend de sa tension).

En accord avec un premier mode de réalisation pratique avantageux de l'invention, présentant une sensibilité plus limitée aux caractéristiques magnétiques du tore T, le circuit passif CP est connecté aux bornes du premier bobinage secondaire BS1 et le circuit de traitement et de commande ETC est connecté aux bornes BBS1 et BBS2 non reliées au point commun PC des deux bobinages secondaires BS1 et BS2, le second bobinage secondaire BS2 présentant avantageusement un nombre de spires supérieur, préférentiellement nettement supérieur (par exemple au moins deux fois supérieur), à celui du premier bobinage secondaire BS1 et les sens d'enroulement desdits deux bobinages BS1 et BS2 précités étant identiques (cf. figure 1).

En accord avec un deuxième mode de réalisation pratique avantageux de l'invention, ressortant de la figure 2, le circuit passif CP est connecté aux bornes BBS1 et BBS2 non reliées au point commun PC des deux bobinages secondaires BS1 et BS2 et le circuit de traitement et de commande ETC est connecté aux bornes du premier bobinage BS1, ledit premier bobinage BS1 présentant un nombre de spires nettement supérieur, c'est-à-dire au moins deux fois supérieur, à celui du second bobinage secondaire BS2, et les sens d'enroulement des deux bobinages BS1 et BS2 précités étant mutuellement opposés.

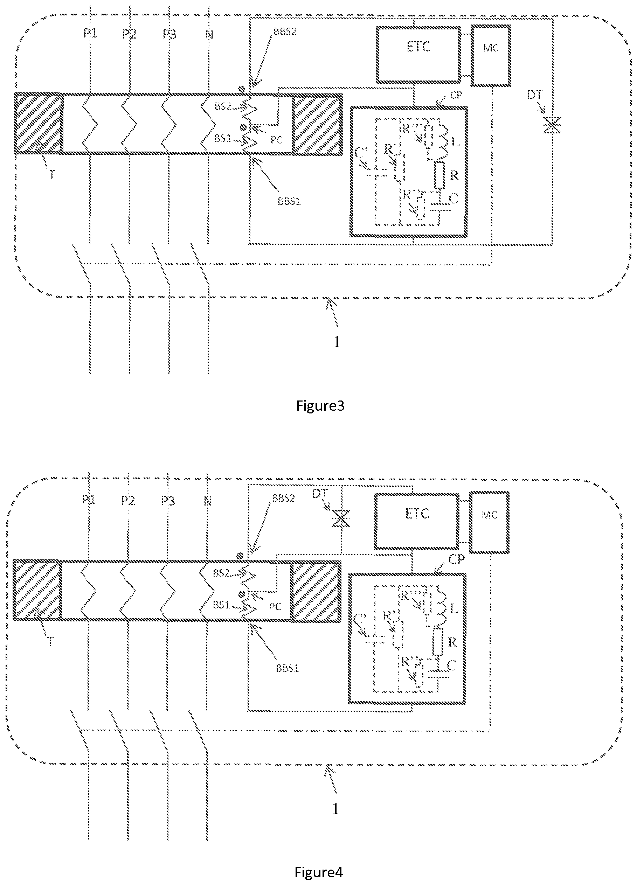

En accord avec un troisième mode de réalisation de l'invention, dont trois variantes sont représentées aux figures 3 à 5, le circuit passif CP peut être connecté aux bornes du premier bobinage secondaire BS1 et le circuit de traitement et de commande ETC est connecté aux bornes du second bobinage secondaire BS2.

L'invention a également pour objet un dispositif différentiel de type F ou de type B, caractérisé en ce qu'il intègre un dispositif 1 tel que décrit ci-dessus.

Enfin, l'invention concerne également, comme le montre la figure 11, un arrangement de dispositifs différentiels à deux niveaux, comprenant un dispositif différentiel de type B, de nature électromécanique et électronique, en amont et plusieurs dispositifs différentiels de type F, de nature exclusivement électromécanique, en aval, cet arrangement étant caractérisé en ce que les dispositifs de type F correspondent chacun à un dispositif 1 tel que mentionné ci-dessus (les dispositifs de type F visés dans la présente sont compatibles avec le dispositif amont de type B, et acceptent la valeur de courant continu de ce dernier, les deux fonctions étant indépendantes).

Bien entendu, l'invention n'est pas limitée aux modes de réalisation décrits et représentés aux dessins annexés. Des modifications restent possibles, notamment du point de vue de la constitution des divers éléments ou par substitution d'équivalents techniques, sans sortir pour autant du domaine de protection de l'invention défini par les revendications. .

## Revendications

1. Dispositif (1) de protection différentielle permettant la détection de courant de fuite ou de défaut dans une installation électrique alimentée par au moins un conducteur de phase (P1, P2, P3) d'un réseau et au moins un conducteur de neutre et/ou de terre (N) dudit réseau,
ledit dispositif (1) comprenant, d'une part, un transformateur avec un noyau, préférentiellement torique, en matériau ferromagnétique (T), avec un primaire constitué par au moins deux des conducteurs (P1, P2, P3, N) précités et avec un ou plusieurs bobinage/s secondaire/s (BS1, BS2) aux bornes duquel, ou de chacun desquels, s'établit un signal induit lors de l'apparition d'un défaut différentiel au niveau du primaire et d'autre part, au moins un circuit de traitement et de commande (ETC) adapté pour traiter le signal induit et pour, en cas de dépassement d'une valeur de seuil prédéfinie, commander un actionneur électromagnétique, un relais ou un moyen de coupure ou d'ouverture analogue (MC) du dispositif (1), ledit ou lesdits circuit/s (ETC) étant relié(s) aux bornes dudit au moins un bobinage secondaire (BS1, BS2),
dispositif de protection différentielle (1) **caractérisé**
**en ce que** le transformateur (T) comporte deux bobinages secondaires (BS1 et BS2) avec un point commun (PC),
**en ce qu'**un circuit passif (CP) comprenant une inductance (L) au moins, ainsi qu'au moins une résistance (R) et/ou au moins un condensateur (C) en série, est relié aux bornes d'au moins un des bobinages secondaires (BS1, BS2) et
**en ce que** ledit circuit de traitement et de commande (ETC) et ledit circuit passif (CP) sont arrangés et connectés de manière telle :
- que l'un de ces deux circuits (ETC et CP) est connecté, d'une part, au point commun (PC) et, d'autre part, à la borne (BBS1) non reliée au point commun (PC) d'un premier (BS1) des deux bobinages secondaires (BS1 et BS2) et
- que l'autre de ces deux circuits (ETC et CP) est soit connecté à chacune des bornes (BBS1, BBS2) des bobinages secondaires (BS1 et BS2) non reliée au point commun (PC), soit connecté, d'une part, au point commun (PC) et, d'autre part, à la borne (BBS2) non reliée au point commun (PC) du second (BS2) des deux bobinages secondaires (BS1 et BS2),
l'inductance (L) faisant partie du circuit passif (CP) étant avantageusement dimensionnée de telle manière que, pour des fréquences de courant de défaut supérieures à environ 20 kHz, le seuil de déclenchement du circuit (ETC) est inférieur ou égal à 420 mA.

2. Dispositif de protection différentielle selon la revendication 1, **caractérisé en ce que** le circuit passif (CP) comprend au moins une résistance (R), montée en série avec l'inductance (L), la valeur de la résistance (R) étant avantageusement dimensionnée de telle manière que, pour des fréquences de courant de défaut supérieures à 20 kHz environ, le seuil de déclenchement du circuit (ETC) est inférieur ou égal à 420 mA.

3. Dispositif de protection différentielle selon l'une quelconque des revendications 1 et 2, **caractérisé en ce que** le circuit passif (CP) comprend au moins un condensateur (C) monté en série avec l'inductance (L), la capacité du condensateur (C) étant avantageusement dimensionnée de telle manière que, pour des fréquences de courant de défaut inférieures à environ 1 kHz, le seuil de déclenchement du circuit (ETC) est inférieur ou égal à 420 mA.

4. Dispositif de protection différentielle selon les revendications 2 et 3, **caractérisé en ce que** le circuit passif (CP) comprend au moins un circuit RLC série, les différents composants (R, L et C) dudit circuit étant dimensionnés de telle manière que le seuil de déclenchement du circuit (ETC) est inférieur à 420 mA, pour des fréquences du courant de défaut comprises entre 0 Hz et 50 kHz au moins, préférentiellement comprises entre 0 Hz et 100 kHz.

5. Dispositif de protection différentielle selon l'une quelconque des revendications 1 à 4, **caractérisé en ce que** le seuil de déclenchement du circuit (ETC) est inférieur ou égal à 300 mA.

6. Dispositif de protection différentielle selon l'une quelconque des revendications 1 à 5, **caractérisé en ce qu'**une résistance (R') est montée en parallèle aux bornes du circuit passif (CP).

7. Dispositif de protection différentielle selon l'une quelconque des revendications 3 et 4, **caractérisé en ce qu'**une résistance (R") est montée en parallèle aux bornes du condensateur (C) du circuit passif (CP).

8. Dispositif de protection différentielle selon l'une quelconque des revendications 1 à 7, **caractérisé en ce qu'**un condensateur (C') est monté en parallèle aux bornes du circuit passif (CP).

9. Dispositif de protection différentielle selon l'une quelconque des revendications 1 à 8, **caractérisé en ce qu'**une résistance (R‴) est montée en parallèle sur l'inductance (L).

10. Dispositif de protection différentielle selon l'une quelconque des revendications 1 à 9, **caractérisé en ce qu'**il comprend, en outre, une diode transil (DT) qui est montée en parallèle sur l'un des deux bobinages secondaires (BS1 et BS2), ou en parallèle sur ces deux bobinages.

11. Dispositif de protection différentielle selon l'une quelconque des revendications 1 à 10, **caractérisé en ce que** le circuit passif (CP) est connecté aux bornes du premier bobinage secondaire (BS1) et **en ce que** le circuit de traitement et de commande (ETC) est connecté aux bornes (BBS1 et BBS2) non reliées au point commun (PC) des deux bobinages secondaires (BS1 et BS2), le second bobinage secondaire (BS2) présentant avantageusement un nombre de spires supérieur à celui du premier bobinage secondaire (BS1) et les sens d'enroulement desdits deux bobinages (BS1 et BS2) précités étant identiques.

12. Dispositif de protection différentielle selon l'une quelconque des revendications 1 à 11, **caractérisé en ce que** le circuit passif (CP) est connecté aux bornes (BBS1 et BBS2) non reliées au point commun (PC) des deux bobinages secondaires (BS1 et BS2) et **en ce que** le circuit de traitement et de commande (ETC) est connecté aux bornes du premier bobinage (BS1), ledit premier bobinage (BS1) présentant un nombre de spires nettement supérieur, c'est-à-dire au moins deux fois supérieur, à celui du second bobinage secondaire (BS2), et les sens d'enroulement des deux bobinages (BS1 et BS2) précités étant mutuellement opposés.

13. Dispositif de protection différentielle selon l'une quelconque des revendications 1 à 10, **caractérisé en ce que** le circuit passif (CP) est connecté aux bornes du premier bobinage secondaire (BS1) et le circuit de traitement et de commande (ETC) est connecté aux bornes du second bobinage secondaire (BS2).

14. Dispositif différentiel de type F ou de type B, **caractérisé en ce qu'**il intègre un dispositif selon l'une quelconque des revendications 1 à 13.

15. Arrangement de dispositifs différentiels à deux niveaux, comprenant un dispositif différentiel de type B, de nature électromécanique et électronique, en amont et plusieurs dispositifs différentiels de type F, de nature exclusivement électromécanique, en aval, arrangement **caractérisé en ce que** les dispositifs de type F correspondent chacun à un dispositif selon l'une quelconque des revendications 1 à 13.

## Patentansprüche

1. Differenzialschutzvorrichtung (1), die die Erkennung eines Leckstroms oder Fehlerstroms in einer Elektroinstallation, die durch mindestens einen Phasenleiter (P1, P2, P2) eines Netzes und mindestens einen Neutral- und/oder Erdleiter (N) des Netzes versorgt wird,
wobei die Vorrichtung (1) einerseits einen Transformator mit einem Kern, vorzugsweise torisch, aus ferromagnetischem Material (T) mit einem Primärkreis aus mindestens zwei der genannten Leiter (P1, P2, P3, N) und mit einer oder mehreren Sekundärwicklungen (BS1, BS2), an deren Anschlüssen sich ein Signal aufbaut, das beim Auftreten einer Differenzialfehlers an der Primärwicklung induziert wird, und andererseits mindestens einen Verarbeitungs- und Steuerschaltkreis (ETC) umfasst, der dazu eingerichtet ist, das induzierte Signal zu verarbeiten und im Fall des Überschreitens eines vordefinierten Schwellenwertes einen elektromagnetischen Aktor, ein Relais oder ein analoges Abschalt- oder Öffnungsmittel (MC) der Vorrichtung (1) zu steuern, wobei der oder die Schaltkreise (ETC) mit den Anschlüssen der mindestens einen Sekundärwicklung (BS1, BS2) verbunden sind,
Differenzialschutzvorrichtung (1), **dadurch gekennzeichnet,**
**dass** der Transformator (T) zwei Sekundärwicklungen (BS1 und BS2) mit einem gemeinsamen Punkt (PC) umfasst,
**dass** ein passiver Schaltkreis (CP), der mindestens eine Induktivität (L) sowie mindestens einen Widerstand (R) und/oder mindestens einen Kondensator (C) in Reihe geschaltet umfasst, mit den Anschlüssen von mindestens einer der Sekundärwicklungen (BS1, BS2) verbunden ist und
**dass** der Verarbeitungs- und Steuerschaltkreis (ETC) und der passive Schaltkreis (CP) so angeordnet und angeschlossen sind:
- **dass** einer dieser beiden Schaltkreise (ETC und CP) einerseits an den gemeinsamen Punkt (PC) und andererseits an den Anschluss (BBS1), der nicht mit dem gemeinsamen Punkt (PC) einer ersten (BS1) der beiden Sekundärwicklungen (BS1 und BS2) verbunden ist, angeschlossen ist und
- **dass** der andere dieser beiden Schaltkreise (ETC und CP) entweder an jeden der Anschlüsse (BBS1, BBS2) der Sekundärwicklungen (BS1 und BS2), die nicht mit gemeinsamen Punkt (PC) verbunden sind, angeschlossen ist oder einerseits an den gemeinsamen Punkt (PC) und andererseits an den Anschluss (BBS2), der nicht mit dem gemeinsamen Punkt (PC) des zweiten (BS2) der beiden Sekundärwicklungen (BS1 und BS2) verbunden ist, angeschlossen ist,
wobei die Induktivität (L), die Teil des passiven Schaltkreises (CP) ist, vorteilhaft so bemessen ist, dass für Fehlerstromfrequenzen über ca. 20 kHz die Auslöseschwelle des Schaltkreises (ETC) kleiner oder gleich 420 mA ist.

2. Differenzialschutzvorrichtung nach Anspruch 1, **dadurch gekennzeichnet, dass** der passive Schaltkreis (CP) mindestens einen Widerstand (R) umfasst, der mit der Induktivität (L) in Reihe geschaltet ist, wobei der Wert des Widerstands (R) vorteilhaft so bemessen ist, dass für Fehlerstromfrequenzen über ca. 20 kHz die Auslöseschwelle des Schaltkreises (ETC) kleiner oder gleich 420 mA ist.

3. Differenzialschutzvorrichtung nach einem der Ansprüche 1 und 2, **dadurch gekennzeichnet, dass** der passive Schaltkreis (CP) mindestens einen Kondensator (C) umfasst, der mit der Induktivität (L) in Reihe geschaltet ist, wobei die Kapazität des Kondensators (C) vorteilhaft so bemessen ist, dass für Fehlerstromfrequenzen unter ca. 1 kHz die Auslöseschwelle des Schaltkreises (ETC) kleiner oder gleich 420 mA ist.

4. Differenzialschutzvorrichtung nach den Ansprüchen 2 und 3, **dadurch gekennzeichnet, dass** der passive Schaltkreis (CP) mindestens einen RLC-Reihenschaltkreis umfasst, wobei die verschiedenen Komponenten (R, L und C) des Schaltkreises so bemessen sind, dass die Auslöseschwelle des Schaltkreises (ETC) für Fehlerstromfrequenzen zwischen 0 Hz und mindestens 50 kHz, vorzugsweise zwischen 0 Hz und 100 kHz, kleiner als 420 mA ist.

5. Differenzialschutzvorrichtung nach einem der Ansprüche 1 bis 4, **dadurch gekennzeichnet, dass** die Auslöseschwelle des Schaltkreises (ETC) kleiner oder gleich 300 mA ist.

6. Differenzialschutzvorrichtung nach einem der Ansprüche 1 bis 5, **dadurch gekennzeichnet, dass** ein Widerstand (R') an den Anschlüssen des passiven Schaltkreises (CP) parallelgeschaltet ist.

7. Differenzialschutzvorrichtung nach einem der Ansprüche 3 und 4, **dadurch gekennzeichnet, dass** ein Widerstand (Rʺ) an den Anschlüssen des Kondensators (C) des passiven Schaltkreises (CP) parallelgeschaltet ist.

8. Differenzialschutzvorrichtung nach einem der Ansprüche 1 bis 7, **dadurch gekennzeichnet, dass** ein Kondensator (C') an den Anschlüssen des passiven Schaltkreises (CP) parallelgeschaltet ist.

9. Differenzialschutzvorrichtung nach einem der Ansprüche 1 bis 8, **dadurch gekennzeichnet, dass** ein Widerstand (R‴) zu der Induktivität (L) parallelgeschaltet ist.

10. Differenzialschutzvorrichtung nach einem der Ansprüche 1 bis 9, **dadurch gekennzeichnet, dass** er außerdem eine Transildiode (DT) umfasst, die zu einer der beiden Sekundärwicklungen (BS1 und BS2) parallelgeschaltet oder zu diesen beiden Wicklungen parallelgeschaltet ist.

11. Differenzialschutzvorrichtung nach einem der Ansprüche 1 bis 10, **dadurch gekennzeichnet, dass** der passive Schaltkreis (CP) an die Anschlüsse der ersten Sekundärwicklung (BS1) angeschlossen ist und dass der Verarbeitungs- und Steuerschaltkreis (ETC) an die Anschlüsse (BBS1 und BBS2), die nicht mit dem gemeinsamen Punkt (PC) der beiden Sekundärwicklungen (BS1 und BS2) verbunden sind, angeschlossen ist, wobei die zweite Sekundärwicklung (BS2) vorteilhaft eine Anzahl von Windungen aufweist, die höher ist als diejenige der ersten Sekundärwicklung (BS1), und die Wicklungsrichtung der beiden genannten Wicklungen (BS1 und BS2) identisch ist.

12. Differenzialschutzvorrichtung nach einem der Ansprüche 1 bis 11, **dadurch gekennzeichnet, dass** der passive Schaltkreis (CP) an die Anschlüsse (BBS1 und BBS2), die nicht mit dem gemeinsamen Punkt (PC) der beiden Sekundärwicklungen (BS1 und BS2) verbunden sind, angeschlossen ist und dass der Verarbeitungs- und Steuerschaltkreis (ETC) an die Anschlüsse der ersten Wicklung (BS1) angeschlossen ist, wobei die erste Wicklung (BS1) eine Anzahl von Windungen aufweist, die deutlich höher ist, d. h. mindestens zweimal höher, als diejenige der zweiten Sekundärwicklung (BS2), und die Wicklungsrichtung der beiden genannten Wicklungen (BS1 und BS2) einander entgegengesetzt ist.

13. Differenzialschutzvorrichtung nach einem der Ansprüche 1 bis 10, **dadurch gekennzeichnet, dass** der passive Schaltkreis (CP) an die Anschlüsse der ersten Sekundärwicklung (BS1) angeschlossen ist und der Verarbeitungs- und Steuerschaltkreis (ETC) an die Anschlüsse der zweiten Sekundärwicklung (BS2) angeschlossen ist.

14. Differenzialschutzvorrichtung vom Typ F oder vom Typ B, **dadurch gekennzeichnet, dass** sie eine Vorrichtung nach einem der Ansprüche 1 bis 13 enthält.

15. Anordnung von Differenzialvorrichtungen auf zwei Ebenen, die vorgeschaltet eine Differenzialvorrichtung vom Typ B von elektromechanischer und elektronischer Art und nachgeschaltet mehrere Differenzialvorrichtungen vom Typ F von ausschließlich elektromechanischer Art umfasst, wobei die Anordnung **dadurch gekennzeichnet ist, dass** die Vorrichtungen vom Typ F jeweils einer Vorrichtung nach einem der Ansprüche 1 bis 13 entsprechen.

## Claims

1. Differential protection device (1) which makes it possible to detect a fault or leakage current in an electrical installation supplied with power by at least one phase conductor (P1, P2, P3) of a network and at least one neutral and/or earth conductor (N) of said network,
said device (1) comprising, on the one hand, a transformer (T) with a core, which is preferably toroidal, made of ferromagnetic material, with a primary composed of at least two of the aforementioned conductors (P1, P2, P3, N) and with one or more secondary windings (BS1, BS2), at the terminals of which secondary winding or of each of which secondary windings a signal induced upon the occurrence of a differential fault at the primary is established and, on the other hand, at least one processing and control circuit (ETC) designed to process the induced signal and, in the event that a predefined threshold value is exceeded, control an electromagnetic actuator, a relay or an analogous breaking or opening means (MC) of the device (1), said circuit or circuits (ETC) being connected to the terminals of said at least one secondary winding (BS1, BS2),
which differential protection device (1) is **characterized**
**in that** the transformer (T) comprises two secondary windings (BS1 and BS2) with a common point (PC),
**in that** a passive circuit (CP) comprising at least one inductor (L), as well as at least one resistor (R) and/or at least one capacitor (C) in series, is connected to the terminals of at least one of the secondary windings (BS1, BS2) and
**in that** said processing and control circuit (ETC) and said passive circuit (CP) are arranged and connected in such a way:
- that one of these two circuits (ETC and CP) is connected, on the one hand, to the common point (PC) and, on the other hand, to the terminal (BBS1), which is not connected to the common point (PC), of a first (BS1) of the two secondary windings (BS1 and BS2) and
- that the other of these two circuits (ETC and CP) is either connected to each of the terminals (BBS1, BBS2) of the secondary windings (BS1 and BS2) which is not connected to the common point (PC) or connected, on the one hand, to the common point (PC) and, on the other hand, to the terminal (BBS2), which is not connected to the common point (PC), of the second (BS2) of the two secondary windings (BS1 and BS2),
the inductor (L) forming part of the passive circuit (CP) advantageously being sized in such a way that, for fault current frequencies greater than about 20 kHz, the trip threshold of the circuit (ETC) is less than or equal to 420 mA.

2. Differential protection device according to Claim 1, **characterized in that** the passive circuit (CP) comprises at least one resistor (R), connected in series with the inductor (L), the value of the resistor (R) advantageously being sized in such a way that, for fault current frequencies greater than about 20 kHz, the trip threshold of the circuit (ETC) is less than or equal to 420 mA.

3. Differential protection device according to either one of Claims 1 and 2, **characterized in that** the passive circuit (CP) comprises at least one capacitor (C) connected in series with the inductor (L), the capacitance of the capacitor (C) advantageously being sized in such a way that, for fault current frequencies less than about 1 kHz, the trip threshold of the circuit (ETC) is less than or equal to 420 mA.

4. Differential protection device according to Claims 2 and 3, **characterized in that** the passive circuit (CP) comprises at least one series RLC circuit, the various components (R, L and C) of said circuit being sized in such a way that the trip threshold of the circuit (ETC) is less than 420 mA, for fault current frequencies between 0 Hz and 50 kHz at least, preferably between 0 Hz and 100 kHz.

5. Differential protection device according to any one of Claims 1 to 4, **characterized in that** the trip threshold of the circuit (ETC) is less than or equal to 300 mA.

6. Differential protection device according to any one of Claims 1 to 5, **characterized in that** a resistor (R') is connected in parallel to the terminals of the passive circuit (CP).

7. Differential protection device according to either one of Claims 3 and 4, **characterized in that** a resistor (Rʺ) is connected in parallel to the terminals of the capacitor (C) of the passive circuit (CP).

8. Differential protection device according to any one of Claims 1 to 7, **characterized in that** a capacitor (C') is connected in parallel to the terminals of the passive circuit (CP).

9. Differential protection device according to any one of Claims 1 to 8, **characterized in that** a resistor (R‴) is connected in parallel across the inductor (L) .

10. Differential protection device according to any one of Claims 1 to 9, **characterized in that** it further comprises a transil diode (DT) which is connected in parallel across one of the two secondary windings (BS1 and BS2), or in parallel across these two windings.

11. Differential protection device according to any one of Claims 1 to 10, **characterized in that** the passive circuit (CP) is connected to the terminals of the first secondary winding (BS1) and **in that** the processing and control circuit (ETC) is connected to the terminals (BBS1 and BBS2), which are not connected to the common point (PC), of the two secondary windings (BS1 and BS2), the second secondary winding (BS2) advantageously having a number of turns which is greater than that of the first secondary winding (BS1) and the winding directions of the two aforementioned windings (BS1 and BS2) being identical.

12. Differential protection device according to any one of Claims 1 to 11, **characterized in that** the passive circuit (CP) is connected to the terminals (BBS1 and BBS2), which are not connected to the common point (PC), of the two secondary windings (BS1 and BS2) and **in that** the processing and control circuit (ETC) is connected to the terminals of the first winding (BS1), said first winding (BS1) having a number of turns which is significantly greater, that is to say at least two times greater, than that of the second secondary winding (BS2), and the winding directions of the two aforementioned windings (BS1 and BS2) being mutually opposite.

13. Differential protection device according to any one of Claims 1 to 10, **characterized in that** the passive circuit (CP) is connected to the terminals of the first secondary winding (BS1) and the processing and control circuit (ETC) is connected to the terminals of the second secondary winding (BS2).

14. Type F or type B differential device, **characterized in that** it incorporates a device according to any one of Claims 1 to 13.

15. Two-level arrangement of differential devices, comprising a type B differential device, of an electromechanical and electronic nature, upstream and a plurality of type F differential devices, of an exclusively electromechanical nature, downstream, which arrangement is **characterized in that** the type F devices each correspond to a device according to any one of Claims 1 to 13.
